# EUROPÄISCHE PATENTSCHRIFT

(11) **EP 3 818 270 B1**
(45) Veröffentlichungstag und Bekanntmachung des Hinweises auf die Patenterteilung: **11.05.2022**
(21) Anmeldenummer: 19768748.6
(22) Anmeldetag: 09.09.2019
(51) Int. Cl.: F15B 1/10, F15B 1/14

(54) **BALGSPEICHER**
BELLOWS ACCUMULATOR
ACCUMULATEUR À SOUFFLET

(30) Priorität: 14.09.2018 DE 102018007280
(43) Veröffentlichungstag der Anmeldung: 12.05.2021
(73) Patentinhaber: Hydac Technology GmbH, 66280 Sulzbach (DE)
(72) Erfinder: BALTES, Herbert, 66679 Losheim (DE); KLOFT, Peter, 56235 Ransbach-Baumbach (DE)
(74) Vertreter: Bartels und Partner, Patentanwälte
(86) Internationale Anmeldenummer: PCT/EP2019/073942
(87) Internationale Veröffentlichungsnummer: WO 2020/053123

(56) Entgegenhaltungen:
- DE-A1-102015 012 253
- FR-A1- 2 563 584

## Beschreibung

Die Erfindung betrifft einen Balgspeicher, bestehend aus mindestens zwei Gehäuseteilen, die ein Speichergehäuse bilden, und mit einem im Speichergehäuse bewegbar angeordneten Trennbalg, der zwei Medienräume voneinander separiert und der zumindest an seinem einen freien Ende an einer Festlegeeinrichtung im Speichergehäuse festgelegt ist, die mit den benachbart angeordneten Gehäuseteilen verschweißt ist.

Balgspeicher dieser Art sind Stand der Technik, vgl. beispielsweise DE 10 2015 012 253 A1. Mit Vorteil werden Balgspeicher in Hydrauliksystemen eingesetzt, vorzugsweise um in Druckfluiden auftretende Druckspitzen zu reduzieren oder zu glätten. Auf manchen Einsatzgebieten, wie unter anderem bei luftfahrttechnischen Anwendungen, sollen eingesetzte Balgspeicher ein möglichst geringes Baugewicht bei gleichzeitig hoher Druckstabilität besitzen. Die bekannten Balgspeicher werden diesen Anforderungen nicht in ausreichendem Maße gerecht.

Ausgehend vom Stand der Technik stellt sich die Erfindung daher die Aufgabe, einen Balgspeicher der eingangs genannten Gattung zur Verfügung zu stellen, der sich durch ein besonders günstiges Verhältnis zwischen seinem Baugewicht und seiner das sichere Betriebsverhalten gewährleistenden Strukturfestigkeit auszeichnet.

Erfindungsgemäß ist diese Aufgabe durch einen Balgspeicher gelöst, der die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die benachbart angeordneten Gehäuseteile zumindest teilweise Titanmaterialien aufweisen, dass die Festlegeeinrichtung aus mindestens zwei miteinander verbundenen Komponenten besteht, von denen mindestens eine zumindest teilweise Titanmaterialien aufweist, die mit den benachbart angeordneten Gehäuseteilen verschweißt ist, und dass die jeweils andere Komponente, aus einem anderen Metallwerkstoff bestehend, dem Festlegen des Trennbalges an der Festlegeeinrichtung dient.

Wenn es gilt, technische Erzeugnisse zu realisieren, die bei geringem Gewicht eine hohe Festigkeit zur Verfügung stellen, geht in der Fachwelt allgemein das Bestreben dahin, Titanmaterialien anstelle anderer Metallwerkstoffe, wie Stahl, einzusetzen. Dieses Vorgehen ist bei vielen Anwendungen vorteilhaft und praktikabel, verbietet sich jedoch in Fällen, bei denen Ti-tanmaterialien und andere metallische Werkstoffe miteinander verschweißt werden müssen, weil Schweißverbindungen zwischen solchen Werkstoffpaarungen nicht sicher ausführbar sind. Dieses Problem stellt sich auch bei der Ausbildung eines Balgspeichers mit aus Titan bestehenden Gehäuseteilen, weil der Einsatz von Titan als Werkstoff für den zugehörigen Metallbalg zu einer sehr begrenzten dynamischen Festigkeit des Balges führen würde. Da der Balg daher aus hierfür geeigneteren Werkstoffen, wie Chrom-Nickel-Molybdän-Edelstahl (AM350), und auch die Festlegeeinrichtung aus einem Stahlwerkstoff zu fertigen sind, ist eine komplette Herstellung des Balgspeichers aus Titan bisher wegen der für eine Schweißverbindung nicht geeigneten Werkstoffpaarung Titan/Stahlwerkstoff nicht möglich.

Die im Patentanspruch 1 angegebene Lösung dieses Problems sieht die Ausbildung der Festlegeeinrichtung aus miteinander verbundenen Komponenten vor, von denen eine Komponente aus Titanmaterial, zusammen mit den aus Titan bestehenden Gehäuseteilen verschweißt ist, während die andere Komponente, in Form eines anderen Metallwerkstoffs, eine problemlose Schweißverbindung mit dem Balg bildet. Mit dem den Großteil bildenden, aus Titan bestehenden Speichergehäuse ist der erfindungsgemäße Balgspeicher bei hoher Festigkeit leichtgewichtig und zeichnet sich bei einem aus einem für den Einsatzzweck geeigneten Edelstahl gebildeten Metallbalg durch ein günstiges Betriebsverhalten aus.

Mit Vorteil bestehen sowohl der Trennbalg als auch die jeweils andere Komponente der Festlegeeinrichtung aus Edelstahl. Als Balgwerkstoff ist ein Chrom-Nickel-Molybdän-Edelstahl besonders geeignet, wie er unter der Bezeichnung AM350 erhältlich ist. Für die Festlegeeinrichtung kann mit Vorteil der Werkstoff 1.4435 eingesetzt sein, ein austenitischer Stahl, der eine hervorragende Schweißbarkeit bietet.

Hierbei können die beiden benachbarten Gehäuseteile und die eine Komponente der Festlegeeinrichtung aus Titan bestehen. Bei diesen Werkstoffpaarungen lassen sich die Schweißverbindungen an der Verbindungsstelle der Gehäuseteile und der einen Komponente der Festlegeeinrichtung sowie die Verbindung zwischen dem Metallbalg und der anderen Komponente der Festlegeeinrichtung jeweils problemlos ausführen.

Mit besonderem Vorteil kann die Anordnung so getroffen sein, dass die aus Titan bestehende eine Komponente und die andere Komponente aus Edelstahl durch Plattieren, vorzugsweise Sprengplattieren, fest miteinander verbunden sind. Dieses bekannte Verfahren (http://smt-holland.com/), fachsprachlich auch als Sprengschweißen bezeichnet, ist ein kaltes Pressschweißverfahren, bei dem Werkstoffe vakuumdicht miteinander verschweißbar sind, die mit üblichen Schweißverfahren nicht miteinander verschweißbar sind, wie Titan/Stahl. Anstelle von Sprengplattieren können auch andere geeignete Plattierverfahren eingesetzt werden.

Mit Vorteil ist die Festlegeeinrichtung als geschlossener Ring ausgebildet, wobei die eine Komponente die andere Komponente ringförmig umfasst oder auf einer Stirnseite, ringförmig und mit einem Überstand vorstehend, an der anderen Komponente festgelegt ist, die der Stirnseite mit dem angeschweißten Trennbalg abgewandt ist.

Die Schweißverbindung zwischen den beiden benachbarten Gehäuseteilen, die eine Unter- und eine Oberschale des Speichergehäuses bilden, kann mit Vorteil zusammen mit der Titankomponente der Festlegeeinrichtung mittels eines Elektronenstrahl-Schweißverfahrens erhalten sein.

Bei bevorzugten Ausführungsbeispielen ist der Trennbalg an seiner anderen freien Stirnseite von einem Führungsteil abgeschlossen, das mit dem Trennbalg fest verschweißt ist.

Mit Vorteil kann die Anordnung hierbei so getroffen sein, dass das Führungsteil eine Führungs- und eine Dichteinrichtung aufweist, wobei die Dichteinrichtung zumindest in der Endstellung des Trennbalgs bei geschlossenem Medienanschluss im Speichergehäuse wirksam ist und in sonstigen, davon abweichenden Arbeitsstellungen des Trennbalgs unwirksam ist. Hierfür kann an der Innenseite des Gehäuseteils eine Rampe gebildet sein, die zu einer Dichtfläche verringerten Innendurchmessers führt und über die die Dichteinrichtung bei Erreichen der Endstellung auf die Dichtfläche aufläuft.

Mit Vorteil kann das Führungsteil an seinem dem Medienanschluss zugewandten Ende eine Kalotte aufweisen, deren Außenkontur der Innenkontur der Unterschale im Bereich des Medienanschlusses nachfolgt und mit diesem in der einen Endstellung zumindest teilweise in Anlage gebracht ist. Bei der Endstellung verbleibt dadurch in der Unterschale praktisch kein freies Restvolumen.

Die Dichteinrichtung kann hierbei zwischen der Kalotte und der Führungseinrichtung des Führungsteils angeordnet und gegenüber der Führungseinrichtung im Durchmesser zurückgesetzt sein, so dass der Außendurchmesser der Dichteinrichtung an die im Innendurchmesser verringerte Dichtfläche des Gehäuseunterteils angepasst ist.

Bei besonders vorteilhaften Ausführungsbeispielen ist auch das Führungsteil aus Titan gebildet und weist an seiner dem Trennbalg zugewandten Stirnseite eine durch Plattieren fest angebrachte ringförmige Komponente aus Edelstahl auf, an der die Schweißverbindung mit dem Trennbalg gebildet ist. Dadurch besteht auch das Führungsteil, das mit seiner Kalotte ein großflächiges Einzelteil darstellt, aus einem leichtgewichtigen Material.

Nachstehend ist die Erfindung anhand von in der Zeichnung dargestellten Ausführungsbeispielen im Einzelnen erläutert.

Es zeigen:
- Fig. 1: einen Längsschnitt eines Ausführungsbeispiels des erfindungsgemäßen Balgspeichers;
- Fig. 2: eine Draufsicht eines Halteringes der Festlegeeinrichtung des Ausführungsbeispiels;
- Fig. 3: einen Längsschnitt des Halterings des Ausführungsbeispiels;
- Fig. 4: einen vergrößert gezeichneten Teilschnitt des in Fig. 3 mit IV bezeichneten Bereichs;

- Fig. 5: einen Längsschnitt des Halterings eines abgewandelten Ausführungsbeispiels des Balgspeichers;
- Fig. 6: einen Teilschnitt des in Fig. 5 mit VI bezeichneten Bereichs;
- Fig. 7: einen Längsschnitt des Führungsteils des erfindungsgemäßen Balgspeichers; und
- Fig. 8: einen vergrößert gezeichneten Teilschnitt des in Fig. 7 mit VIII bezeichneten Bereichs des Führungsteils eines abgewandelten Ausführungsbeispiels.

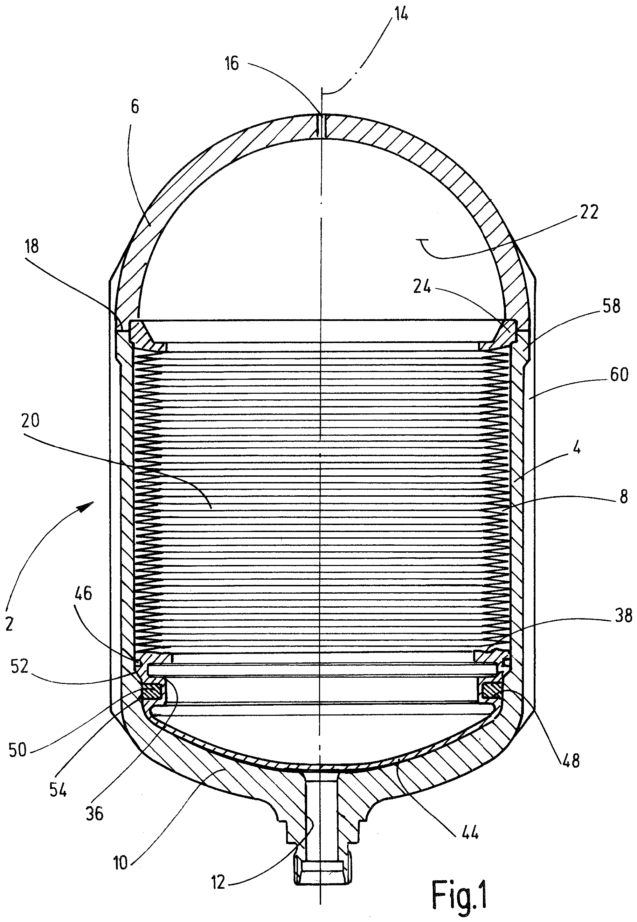

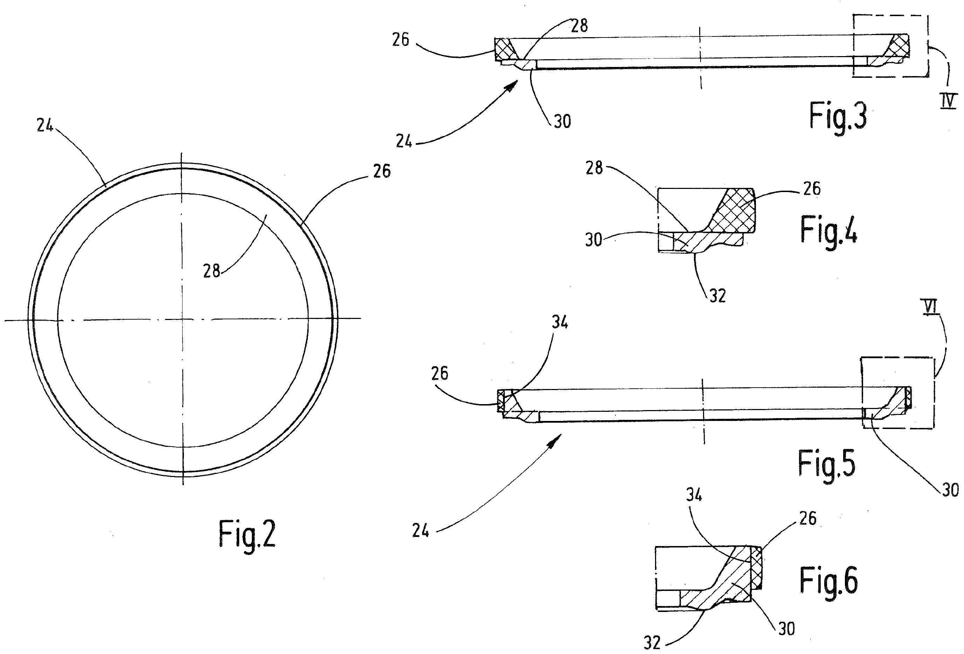

Das in Fig. 1 gezeigte Ausführungsbeispiel des erfindungsgemäßen Balgspeichers weist ein als Ganzes mit 2 bezeichnetes Speichergehäuse auf, das zwei Gehäuseteile aus Titan aufweist, von denen eines ein mit 4 bezeichnetes Gehäuse-Hauptteil und das andere ein mit 6 bezeichnetes Gehäuse-Abschlussteil bildet. Das Hauptteil 4 hat die Form eines Topfes mit einem kreiszylindrischen Innenraum 8 und einem kalottenartig gewölbten Topfboden 10, der bis auf einen zentral gelegenen Fluidanschluss 12 geschlossen ist. Das Abschlussteil 6 hat die Form einer halbkugelförmigen Schale, die bis auf eine zur Gehäuselängsachse 14 koaxiale Füllöffnung 16 geschlossen ist. Hauptteil 4 und Abschlussteil 6 sind entlang ihrer einander zugewandten Endränder an einer Schweißlinie 18 miteinander verschweißt. Im kreiszylindrischen Innenraum 8 zwischen der Schweißlinie 18 und dem Topfboden 10 ist ein Trennbalg in Form eines metallischen Faltenbalgs 20 aufgenommen. Wie bei Faltenbälgen für Balgspeicher üblich, ist der Balg 20 aus einem Edelstahl gefertigt, wobei beim vorliegenden Beispiel eine Chrom-Nickel-Molybdän-Stahllegierung (AM350) vorgesehen ist. An seinem in Fig. 1 oben liegenden Ende, an dem der Balg 20 zu der an die Füllöffnung 16 angrenzenden Gasseite 22 des Speichergehäuses 2 offen ist, ist der Balg 20 mit seiner letzten Balgfalte mit einem Haltering 24 verschweißt, der die Festlegeeinrichtung bildet, mit der der Balg 20 an seinem unbeweglichen Balgende am Speichergehäuse 2 festgelegt ist. Der Haltering 24 ist, was der vereinfachten Darstellung der Fig. 1 nicht entnehmbar ist, aus zwei Werkstoffkomponenten aufgebaut, wie dies in Fig. 3 und 4 näher dargestellt ist. Dieser Mehrkomponenten-Aufbau, mit einer aus Titan bestehenden Komponente und einer aus Edelstahl, wie Stahl 1.4435, bestehenden anderen Komponente, eröffnet die Möglichkeit, den Haltering 24 mit dem Ende des Balgs 20 und mit der Titankomponente mit dem aus Titan bestehenden Speichergehäuse 2 zu verschweißen. Mittels Laserschweißen kann hierbei gleichzeitig die Verbindung der Gehäuseteile 4 und 6 an der Schweißlinie 18 und die Schweißverbindung mit der Titankomponente des Halterings 24 gebildet werden.

Die Fig. 3 und 4 zeigen den Mehrkomponenten-Aufbau des Halterings 24. Die erste Komponente ist durch einen Titanring 26 gebildet, der auf einer ebenflächigen Stirnfläche 28 eines die zweite Komponente bildenden Edelstahlrings 30 angeordnet ist, der beim vorliegenden Beispiel aus Edelstahl 1.4435 gebildet ist. Wie Fig. 4 am deutlichsten zeigt, weist der Titanring 26 einen geringfügig größeren Durchmesser als der Edelstahlring 30 auf, so dass er umfangsseitig über den Edelstahlring 30 radial vorsteht. Mit dem Überstand bildet der Titanring 26 den Schweißbereich, an dem der Haltering 24 zur Festlegung zusammen mit den Gehäuseteilen 4 und 6 an der Schweißlinie 18 verschweißt ist. Wie ebenfalls der Fig. 4 entnehmbar ist, weist der Edelstahlring 30 an der vom Titanring 26 abgekehrten freien Stirnseite einen geringfügig vorstehenden Ringwulst 32 auf, der die Schweißlinie für die Verbindung des Halterings 24 mit der letzten Falte des Balgs 20 bildet.

Die Fig. 5 und 6 zeigen den Mehrkomponenten-Aufbau des Halterings 24 eines zweiten Ausführungsbeispiels. Der Edelstahlring 30 weist hierbei einen hochgezogenen Umfangsrand 34 auf, an dessen Außenumfang der Titanring 26 in Form eines Zylinderrings angeordnet ist, der eine Umfassung des Halterings 24 bildet. Wie beim Beispiel von Fig. 3 und 4 bildet der Titanring 26 den Schweißbereich an der Schweißlinie 18. Ebenfalls, wie in Fig.3 und 4 gezeigt, bildet ein flacher Ringwulst 32 die Schweißlinie für die Verbindung mit dem Balg 20. Die feste Verbindung der Komponenten des Halterings 24 ist, wie bei Fig. 3 und 4, durch Plattieren, wie Sprengplattieren, gebildet.

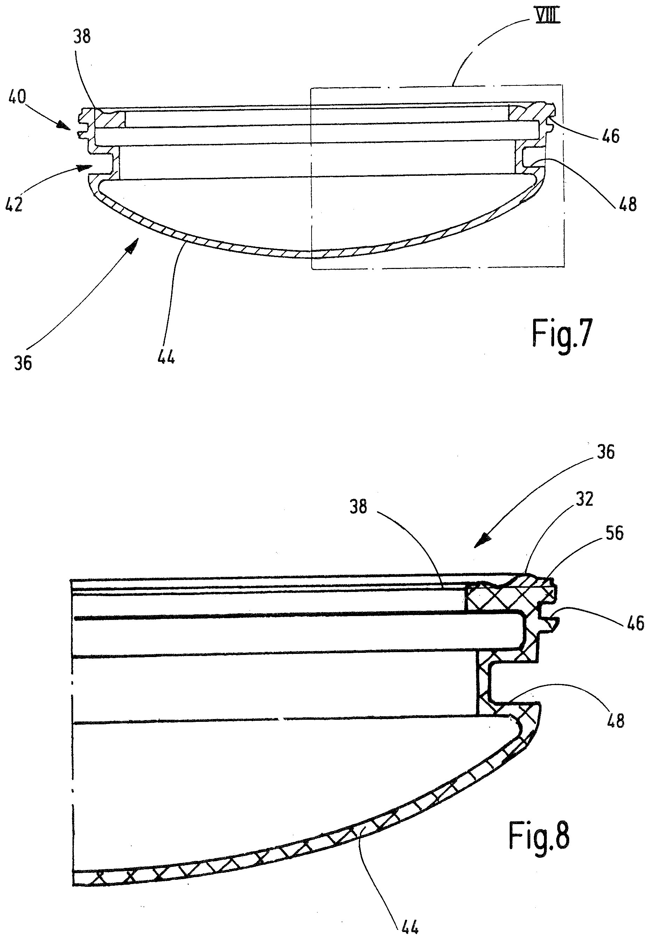

An seinem anderen freien Ende, das dem mit dem Haltering 24 verbundenen, offenen Balgende entgegengesetzt ist, ist der Innenraum des Balgs 20 durch ein Führungsteil 36 aus Edelstahl (wie Stahl 1.4435) geschlossen, das mit dem zugewandten Balgende fest verschweißt ist. Das in Fig. 7 gesondert dargestellte Führungsteil 36 hat die Gestalt einer kreisrunden Schale, an deren Außenumfang, vom offenen Schalenrand 38 ausgehend, eine Führungseinrichtung 40 und eine sich daran anschließende Dichtungseinrichtung 42 gebildet sind. An diese schließt sich ein den Boden der Schale bildendes Kalottenteil 44 an, dessen Kontur der Innenkontur des Topfbodens 10 des Gehäusehauptteils 4 entspricht. Bei der in Fig. 1 gezeigten Endstellung des Balgs 20 ist das Kalottenteil 44 daher mit der Innenseite des Topfbodens 10 in Anlage, s. Fig. 1. Die Führungseinrichtung 40 weist eine schmale, umfänglich verlaufende Ringnut 46 in der Nähe des Schalenrandes 38 und eine breitere Ringnut 48 auf, die zwischen der Ringnut 46 und dem Kalottenteil 44 gelegen ist. Die schmale Ringnut 46 der Führungseinrichtung ist zur Aufnahme eines schmalen Führungsringes bestimmt, der in der Zeichnung nicht dargestellt ist, während die Ringnut 48 der Dichteinrichtung 42 einen Dichtring 50 aufnimmt, der in der Fig. 1 sichtbar ist.

Wie bei Balgspeichern an sich bekannt und auch in der zum Stand der Technik erwähnten DE 10 2015 012 253 A1 in Fig. 2 gezeigt, ist der Außendurchmesser des Balgs 20 etwas geringer als der Innendurchmesser des zylindrischen Teils des Gehäusehauptteils 4, so dass zwischen Balg 20 und Innenwand ein geringer Spalt verbleibt. Der (nicht gezeigte) Führungsring in der Ringnut 46 hat die Funktion, die Balgfalten bei Bewegungen aus der in Fig. 1 gezeigten Endstellung heraus unter Beibehalten des Spalts entlang der Innenwand zu führen. Hierfür ist der Führungsring, wie es in EP 2 519 748 B1 in Fig. 5 und 6 aufgezeigt ist, durch einen Flachring aus einem Kunststoff guter Gleiteigenschaften, wie Polytetrafluorethylen, gebildet. Um am Umfang des Führungsrings Fluiddurchgänge zu bilden, um Fluid vom Fluidanschluss 12 her in den den Balg 20 umgebenden Innenraum 8 gelangen zu lassen, sind am Umfang des Führungsrings zwischen Führungskörpern, die als Führungsschuhe an der Gehäusewand anliegen, zurückversetzte Bereiche als Durchlassstellen gebildet. Im Betrieb bildet daher der den Balg 20 umgebende Innenraum 8 ein Teil der Ölseite. Bei nicht vollständig zusammengedrücktem Balg 20 bilden die zwischen den Balgfalten vorhandenen Zwischenräume, deren Volumen sich bei den Balgbewegungen im Betrieb entsprechend verändert, Dämpfungsräume als Bestandteil der Ölseite, wobei zwischen den Spitzen der Falten und der Gehäuseinnenwand jeweils Dämpfungsdrosseln gebildet sind, wobei das gewählte Spaltmaß zwischen Innenwand des Hauptteils 4 und den Balgspitzen den Drosselquerschnitt bestimmt.

Wie Fig. 1 zeigt, ist am Übergang zwischen Gehäusehauptteil 4 und Topfboden 10 der Gehäuseinnendurchmesser durch einen Innenkonus 52 verjüngt, der eine Rampenfläche 52 bildet, über die der Dichtring 50 der Dichteinrichtung 42 auf eine zylindrische Dichtfläche 54 gelangt, wenn sich der Balg 20 in seine in Fig. 1 gezeigte Endstellung bewegt hat. Dadurch ist der Fluiddurchtritt vom Fluidanschluss 12 zum Innenraum 8 lediglich in der Balgendstellung gesperrt, in anderen Balgstellungen jedoch freigegeben. Während, wie in Fig. 1 erkennbar, bei dem aus membranartigen Ringscheiben zusammengesetzten Balg 20 die Scheiben zum Umfangsrand hin ebenflächig verlaufen, können die Membranscheiben auch eine Profilierung in Form einer Wellenform besitzen, wie dies beispielhaft in DE 10 2006 014 456 A1 in der dortigen Fig. 4 aufgezeigt ist.

Die Fig. 8 zeigt eine Ausführungsform, die eine besonders leichtgewichtige Bauweise des Balgspeichers ermöglicht. Das Führungsteil 36 besteht hier aus Titan und weist an seinem dem Balg 20 zugewandten Schalenrand 38 eine Zusatzkomponente in Form eines Flachringes 56 aus Edelstahl, wie Stahl 1.4435, auf, der in seiner Funktion dem Stahlring 30 der Fig. 3 bis 6 entspricht, der die Stahlkomponente am Haltering 24 bildet. Wie der Stahlring 30 der Fig. 3 bis 6 ist auch der Flachring 56 durch Plattieren, wie Sprengplattieren, an der Stirnfläche am Schalenrand 38 des Führungsteils 36 angebracht. Wie der Stahlring 30 weist auch der Flachring 56 einen vorstehenden Ringwulst 32 auf, der die Schweißlinie der Schweißverbindung mit dem Balg 20 bildet.

Wie Fig. 1 zeigt, weist das Gehäusehauptteil 4, ausgehend von einem verdickten Wandteil 58, das sich an die Schweißlinie 18 anschließt, einen Bereich verringerter Wandstärke auf, der sich bis zum Bereich des Topfbodens 10 erstreckt. Wie in Fig. 1 angedeutet ist, weist dieser Bereich eine Faserbewicklung 60 aus Glasfasermaterial auf, die sich über die Schweißlinie 18 hinaus bis zum Anfangsbereich des Gehäuseteils 6 erstreckt. Die Faserbewicklung 60 entspricht in ihrem Aufbau den die Druckfestigkeit verstärkenden Bewicklungen, wie sie bei Druckbehältern unter der Fachbezeichnung "Liner" bekannt sind.

## Patentansprüche

1. Balgspeicher, bestehend aus mindestens zwei Gehäuseteilen (4, 6), die ein Speichergehäuse (2) bilden, und mit einem im Speichergehäuse (2) bewegbar angeordneten Trennbalg (20), der zwei Medienräume (8, 22) voneinander separiert und der zumindest an seinem einen freien Ende an einer Festlegeeinrichtung (24) im Speichergehäuse (2) festgelegt ist, die mit den benachbart angeordneten Gehäuseteilen (4, 6) verschweißt ist, **dadurch gekennzeichnet, dass** die benachbart angeordneten Gehäuseteile (4, 6) zumindest teilweise Titanmaterialien aufweisen, dass die Festlegeeinrichtung (24) aus mindestens zwei miteinander verbundenen Komponenten (26, 30) besteht, von denen mindestens eine (26) zumindest teilweise Titanmaterialien aufweist, die mit den benachbart angeordneten Gehäuseteilen (4, 6) verschweißt ist, und dass die jeweils andere Komponente (30), aus einem anderen Metallwerkstoff bestehend, dem Festlegen des Trennbalges (20) an der Festlegeeinrichtung (24) dient.

2. Balgspeicher nach Anspruch 1, **dadurch gekennzeichnet, dass** der Trennbalg (20) und die jeweils andere Komponente (30) der Festlegeeinrichtung (24) aus Edelstahl bestehen.

3. Balgspeicher nach Anspruch 1 oder 2, **dadurch gekennzeichnet, dass** die beiden benachbarten Gehäuseteile (4, 6) und die eine Komponente (26) der Festlegeeinrichtung (24) aus Titan bestehen.

4. Balgspeicher nach Anspruch 2 und Anspruch 3, **dadurch gekennzeichnet, dass** die aus Titan bestehende eine Komponente (26) und die andere Komponente (30) aus Edelstahl durch Plattieren fest miteinander verbunden sind.

5. Balgspeicher nach einem der vorstehenden Ansprüche, **dadurch gekennzeichnet, dass** die Festlegeeinrichtung als geschlossener Ring (24) ausgebildet ist und dass die eine Komponente (26) die andere Komponente (30) ringförmig umfasst oder auf einer Stirnseite (28), ringförmig und mit einem Überstand vorstehend, an der anderen Komponente (30) festgelegt ist, die der Stirnseite mit dem angeschweißten Trennbalg (20) abgewandt ist.

6. Balgspeicher nach einem der vorstehenden Ansprüche, **dadurch gekennzeichnet, dass** die Schweißverbindung (18) zwischen den beiden benachbarten Gehäuseteilen (4, 6), die eine Unter- und eine Oberschale des Speichergehäuses (2) bilden, zusammen mit der Titankomponente (26) der Festlegeeinrichtung (24) mittels eines Elektronenstrahl-Schweißverfahrens erhalten ist.

7. Balgspeicher nach einem der vorstehenden Ansprüche, **dadurch gekennzeichnet, dass** der Trennbalg (20) an seiner anderen freien Stirnseite von einem Führungsteil (36) abgeschlossen ist, das mit dem Trennbalg (20) fest verschweißt ist.

8. Balgspeicher nach Anspruch 7, **dadurch gekennzeichnet, dass** das Führungsteil (36) eine Führungs- (40) und eine Dichteinrichtung (42) aufweist, und dass die Dichteinrichtung (42) zumindest in der Endstellung des Trennbalgs (20) bei verschlossenem Medienanschluss (12) im Speichergehäuse (2) wirksam ist und in sonstigen, davon abweichenden Arbeitsstellungen des Trennbalgs (20) unwirksam ist.

9. Balgspeicher nach Anspruch 8, **dadurch gekennzeichnet, dass** das Führungsteil (36) an seinem dem Medienanschluss (12) zugewandten Ende eine Kalotte (44) aufweist, deren Außenkontur der Innenkontur der Unterschale (10) im Bereich des Medienanschlusses (12) nachfolgt und mit diesem in der einen Endstellung zumindest teilweise in Anlage gebracht ist.

10. Balgspeicher nach Anspruch 9, **dadurch gekennzeichnet, dass** die Dichteinrichtung (42) zwischen der Kalotte (44) und der Führungseinrichtung (40) des Führungsteils (36) angeordnet und gegenüber der Führungseinrichtung (40) im Durchmesser zurückgesetzt ist.

11. Balgspeicher nach einem der Ansprüche 7-10, **dadurch gekennzeichnet, dass** das Führungsteil (36) aus Titan gebildet ist und an seiner dem Trennbalg (20) zugewandten Stirnseite eine durch Plattieren fest angebrachte ringförmige Komponente (56) aus Edelstahl aufweist, an der die Schweißverbindung mit dem Trennbalg (20) gebildet ist.

## Claims

1. Bellows accumulator, consisting of at least two housing parts (4, 6) which form an accumulator housing (2), and having a separating bellows (20) which is arranged to be movable in the accumulator housing (2), separates two media chambers (8, 22) from each other and is fixed at its one free end to a fixing device (24) in the accumulator housing (2), said fixing device being welded to the adjacently arranged housing parts (4, 6), **characterised in that** the adjacently arranged housing parts (4, 6) at least partially comprise titanium materials, **in that** the fixing device (24) consists of at least two interconnected components (26, 30), at least one (26) of which at least partially comprises titanium materials and is welded to the adjacently arranged housing parts (4, 6), and **in that** the respective other component (30), consisting of a different metal material, serves to fix the separating bellows (20) to the fixing device (24).

2. Bellows accumulator according to claim 1, **characterised in that** the separating bellows (20) and the respective other component (30) of the fixing device (24) consist of stainless steel.

3. Bellows accumulator according to claim 1 or 2, **characterised in that** the two adjacent housing parts (4, 6) and the one component (26) of the fixing device (24) consist of titanium.

4. Bellows accumulator according to claim 2 and claim 3, **characterised in that** the one component (26) consisting of titanium and the other component (30) of stainless steel are firmly connected to each other by plating.

5. Bellows accumulator according to one of the preceding claims, **characterised in that** the fixing device is configured as a closed ring (24) and **in that** the one component (26) surrounds the other component (30) annularly or is fixed on an end face (28), annularly and protruding with an overhang, to the other component (30) which is directed away from the end face with the separating bellows (20) welded on.

6. Bellows accumulator according to one of the preceding claims, **characterised in that** the welded joint (18) between the two adjacent housing parts (4, 6), which form a lower and an upper shell of the accumulator housing (2), is obtained together with the titanium component (26) of the fixing device (24) by means of an electron beam welding process.

7. Bellows accumulator according to one of the preceding claims, **characterised in that** the separating bellows (20) is terminated at its other free end face by a guide part (36) which is firmly welded to the separating bellows (20).

8. Bellows accumulator according to claim 7, **characterised in that** the guide part (36) comprises a guide device (40) and a sealing device (42) and **in that** the sealing device (42) is effective at least in the end position of the separating bellows (20) when the media connection (12) in the accumulator housing (2) is closed and is ineffective in other working positions of the separating bellows (20) deviating therefrom.

9. Bellows accumulator according to claim 8, **characterised in that** the guide part (36) has, on its end directed towards the media connection (12), a flattened dome (44) the outer contour of which follows the inner contour of the lower shell (10) in the region of the media connection (12) and is brought at least partially into contact with the latter in the one end position.

10. Bellows accumulator according to claim 9, **characterised in that** the sealing device (42) is arranged between the flattened dome (44) and the guide device (40) of the guide part (36) and is recessed in diameter in relation to the guide device (40).

11. Bellows accumulator according to one of claims 7-10, **characterised in that** the guide part (36) is formed of titanium and has, on it end face directed towards the separating bellows (20), an annular component (56) of stainless steel which is firmly attached by plating and on which the welded joint to the separating bellows (20) is formed.

## Revendications

1. Accumulateur à soufflet, constitué d'au moins deux parties (4, 6) d'enveloppe, qui forment une enveloppe (2) d'accumulateur, et comprenant un soufflet (20) de séparation, qui est disposé mobile dans l'enveloppe (2) de l'accumulateur, qui sépare l'un de l'autre deux espaces (8, 22) pour des fluides et qui est fixé au moins à son extrémité libre à un dispositif (24) de fixation dans l'enveloppe (2) de l'accumulateur, dispositif qui est soudé aux parties (4, 6) de l'enveloppe disposées en étant voisines, **caractérisé en ce que** les parties (4, 6) de l'enveloppe disposées en étant voisines ont au moins en partie des matériaux en titane, **en ce que** le dispositif (24) de fixation est constitué d'au moins deux composants (26, 30) reliés entre eux, dont l'un (26) au moins a au moins en partie des matériaux en titane et est soudé aux parties (4, 6) de l'enveloppe disposée en étant voisines et **en ce que**, respectivement l'autre composant (30) constitué en un autre matériau métallique sert à la fixation du soufflet (20) de séparation au dispositif (24) de fixation.

2. Accumulateur à soufflet suivant la revendication 1, **caractérisé en ce que** le soufflet (20) et l'autre composant (30) du dispositif (24) de fixation sont en acier fin.

3. Accumulateur à soufflet suivant la revendication 1 ou 2, **caractérisé en ce que** les deux parties (4, 6) de l'enveloppe voisines et le un composant (26) du dispositif (24) de fixation sont en titane.

4. Accumulateur à soufflet suivant la revendication 2 et 3, **caractérisé en ce que** le un composant (26) en titane et l'autre composant (30) en acier fin sont reliés l'un à l'autre fixement par placage.

5. Accumulateur à soufflet suivant l'une des revendications précédentes, **caractérisé en ce que** le dispositif de fixation est constitué sous la forme d'un anneau (24) fermé et **en ce que** le un composant (26) entoure annulairement l'autre composant (30) ou, sur un côté (28) frontal, annulairement et en saillie avec un dépassement, est fixé à l'autre composant (30), qui est tourné vers le côté frontal ayant le soufflet (20) de séparation soudé.

6. Accumulateur à soufflet suivant l'une des revendications précédentes, **caractérisé en ce que** le soudage (18) entre les deux parties (4, 6) d'enveloppe voisines, qui forment une coquille inférieure et une coquille supérieure de l'enveloppe (2) de l'accumulateur, est obtenu ensemble avec le composant (26) de titane du dispositif (24) de fixation, au moyen d'un procédé de soudage par faisceau d'électrons.

7. Accumulateur à soufflet suivant l'une des revendications précédentes, **caractérisé en ce que** le soufflet (20) de séparation est fermé à son autre côté frontal libre par une partie (36) de guidage, qui est soudée fixement au soufflet (20) de séparation.

8. Accumulateur à soufflet suivant la revendication 7, **caractérisé en ce que** la partie (36) de guidage a un dispositif (40) de guidage et un dispositif (42) d'étanchéité et **en ce que** le dispositif (42) d'étanchéité est efficace, au moins dans la position d'extrémité du soufflet (20) de séparation, alors que le raccord (12) pour des fluides de l'enveloppe (2) de l'accumulateur est fermé et, dans d'autres positions de travail, s'en écartant, du soufflet (20) de séparation, est inefficace.

9. Accumulateur à soufflet suivant la revendication 8, **caractérisé en ce que** la partie (36) a, à son extrémité, tournée vers le raccord (12) pour des fluides, une calotte (44) dont le contour extérieur suit le contour intérieur de la coque (10) inférieure, dans la partie du raccord (12) pour des fluides et peut être mise en contact, au moins en partie, avec celui-ci dans la une position d'extrémité.

10. Accumulateur à soufflet suivant la revendication 9, **caractérisé en ce que** le dispositif (42) d'étanchéité est disposé entre la calotte (44) et le dispositif (40) de guidage de la partie (36) de guidage, et est en retrait en diamètre par rapport au dispositif (40) de guidage.

11. Accumulateur à soufflet suivant l'une des revendications 7 à 10, **caractérisé en ce que** la partie (36) de guidage est en titane et a, sur son côté frontal, tournée vers le soufflet (20) de séparation, un composant (56) annulaire en acier fin, mis fixement par plaquage et sur lequel le soudage avec le soufflet (20) de séparation est formé.
